# EUROPEAN PATENT APPLICATION

(11) **EP 1 206 110 A2**
(43) Date of publication of application: **15.05.2002**
(21) Application number: 01440373.7
(22) Date of filing: 05.11.2001
(51) Int. Cl.: H04M 15/00

(54) **Architecture for property management and call accounting**

(30) Priority: 09.11.2000 US 246990 P
(71) Applicant: ALCATEL, 75008 Paris (FR)
(72) Inventor: Wengrovitz, Michael, Concord, Massachusetts 01742 (US); Steiner, Michael R., 92600 Asnieres (FR)
(74) Representative: Dreiss, Fuhlendorf, Steimle & Becker

(57) **Abstract**

A system and method for centralizing property management and/or call accounting services for a hotel through a network-based service provider. This architecture allows hotels to migrate from existing premise-based systems for PMS and Call Accounting to a centralized system without the need for replacing the existing PBX system at each hotel premise. An internetwork for providing property management services includes a client network and a service provider network. The client network transmits to the service provider network a call parameter for a completed call. The service provider network preferably determines a cost for the completed call based on the call parameter and transmits the call cost information back to the client network to charge the cost to an account.

## Description

### CROSS-REFERENCE TO RELATED APPLICATION(S)

This application claims the benefit of U.S. provisional application 60/246,990 filed on November 9, 2000, the content of which is incorporated herein by reference.

### BACKGROUND OF THE INVENTION

Hotels typically utilize a property management system (PMS) generally located within a hotel premise network to property manage and bill hotel patrons. For instance, the PMS may manage the check-in and check-out of the patrons as well as bill them for charges, including telephone charges, incurred while staying at the hotel. The PMS typically interacts with a call accounting system (CAS) also located in the hotel premise network to bill the patrons for the telephone charges. The CAS typically includes logic for calculating the cost of completed calls and transmitting the cost information to the PMS for billing.

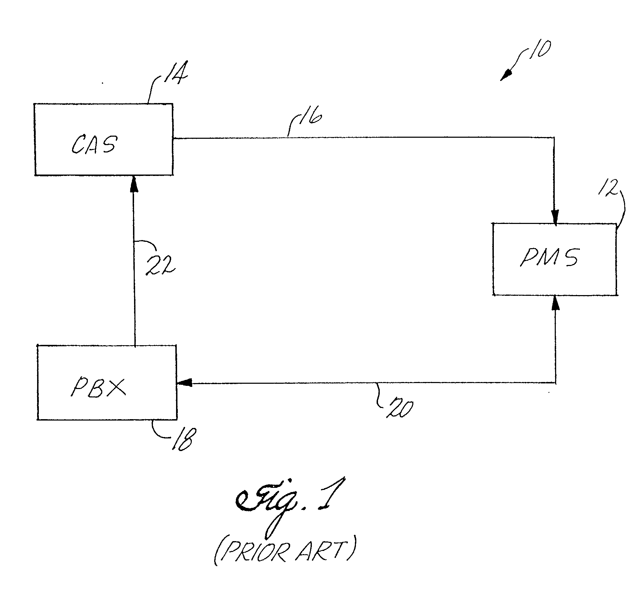

FIG. 1 is a schematic block diagram of a hotel premise network 10 typically hosted by a hotel. The hotel premise network 10 includes a PMS 12 coupled to a CAS 14 over a serial link 16. The hotel premise network 10 also includes a private branch exchange (PBX) unit 18 coupled to the PMS 12 and the CAS 14 over serial links 20, 22, 24.

The hotel premise network 10 illustrated in FIG. 1 is self-contained in that the property management and call accounting functions may be handled by the PMS 12 and CAS 14 without the need to invoke external devices outside the hotel premise network 10. In such a self-contained system, when a patron checks in, the patron's call account is typically activated through a message exchange on serial link 20 connecting the PMS 12 and the PBX unit 18. When the patron initiates and terminates a call, a call detail record (CDR) including a calling extension, called number, and call duration is typically transmitted over serial link 22 from the PBX unit 18 to the CAS 14. In response, the CAS 14 typically generates call cost information and transmits the call cost information on serial link 16 to the PMS 12 for billing to the patron's call account. When the patron checks out, the patron's call account is typically deactivated through a message exchange on serial link 20, and the patron is billed for the completed calls and other hotel charges.

Although such self-contained systems may offer many benefits for single hotel sites, they are typically highly inefficient for use by hotel chains. For example, making changes to the system on a chain-wide basis, such as adding a new billing parameter to the PMS 12, making a tariff change, or incorporating a new telephone area code to the CAS 14, may become laborious and time consuming since the changes must generally be programmed individually at each hotel site. The addition of a new hotel to a hotel chain is similarly laborious since the property management and call accounting parameters must generally be programmed at the new site from scratch.

Accordingly, there is a need for a new architecture for property management and call accounting that is more efficient than the conventional self-contained systems. While promoting efficiency, the new architecture should be designed to protect to the greatest extent possible existing investments in the installed equipment at the hotel.

### SUMMARY OF THE INVENTION

The present invention is directed to a system and method for centralizing the property management and/or call accounting services through a network-based service provider. One of the benefits of the architecture described in the present invention allows hotels to migrate from existing premise-based systems for PMS and Call Accounting to a centralized system, without the need for replacing or modifying the existing PBX system at each hotel premise. Another benefit is that changes to call accounting and/or property management parameters may now be made from a centralized site instead of programming the changes individually at each hotel site.

According to one embodiment of the present invention, an internetwork for providing property management services preferably includes a client network and a service provider network. The client network preferably transmits to the service provider network a call parameter for a completed call. The service provider network preferably determines a cost for the completed call based on the call parameter and transmits the call cost information back to the client network to charge the cost to an account.

In another embodiment of the present invention, the internetwork preferably includes a plurality of client networks coupled to a service provider network over a wide area network. Ones of the client networks include ones of private branch exchanges, respectively, coupled to first ones of protocol converters, respectively, for exchanging data with the service provider network. The service provider network includes a call accounting system and a second protocol converter for exchanging data with ones of the client networks.

In a further embodiment of the present invention, the internetwork preferably includes a client network that includes a call management unit and a first protocol converter. The call management unit generates call parameter data for a completed call. The first protocol converter is coupled to the call management unit and converts between a first transmission format and a second transmission format. The internetwork preferably further includes a service provider network including a call accounting system and a second protocol converter. The call accounting system receives the call parameter data and determines a cost for the completed call based on the call parameter data. The second protocol converter is coupled to the call accounting system and converts between a third transmission format and a fourth transmission format. The internetwork also includes a wide area network electronically linking the client network to the service provider network for allowing communication between the client network and the service provider network.

In yet another embodiment, the present invention includes a method for providing property management services in a system including a client network coupled to a service provider network over a wide area network. The method preferably includes generating at the client network a call parameter for a completed call and transmitting to the service provider network the call parameter. Call cost information for the completed call is determined at the service provider network based on the call parameter. The call cost information is transmitted back to the client network to charge the cost to an account.

It should be appreciated, therefore, that the centralization of property management services at the service provider network promotes efficiencies not generally encountered in the conventional self-contained systems. The addition of new hotel sites to a hotel chain should be less laborious under the present invention since parameters for property management and/or call accounting handled at the service provider network need not be reprogrammed at the new site. Changes to these parameters should also be more efficient. The changes need no longer be individually programmed at each affected hotel site, but may now be made at the single service provider network providing the property management and/or call accounting services for these hotel sites.

### BRIEF DESCRIPTION OF THE DRAWINGS

These and other features, aspects and advantages of the present invention will be more fully understood when considered with respect to the following detailed description, appended claims, and accompanying drawings where:
FIG. 1 is a schematic block diagram of a hotel premise network traditionally hosted by a hotel;
FIG. 2 is a schematic block diagram of an internetwork for providing centralized property management services including call accounting services according to one embodiment of the invention;
FIGS. 3A-3B are flow diagrams for processing and billing telephone call charges according to the embodiment illustrated in FIG. 2;
FIG. 4 is a schematic block diagram of an internetwork for providing centralized property management services including call accounting services according to another embodiment of the present invention;
FIG. 5 is a schematic block diagram of an internetwork for providing centralized call accounting services according to a further embodiment of the present invention; and
FIG. 6 is a flow diagram for processing telephone call charges according to the embodiment illustrated in FIG. 5.

### DETAILED DESCRIPTION

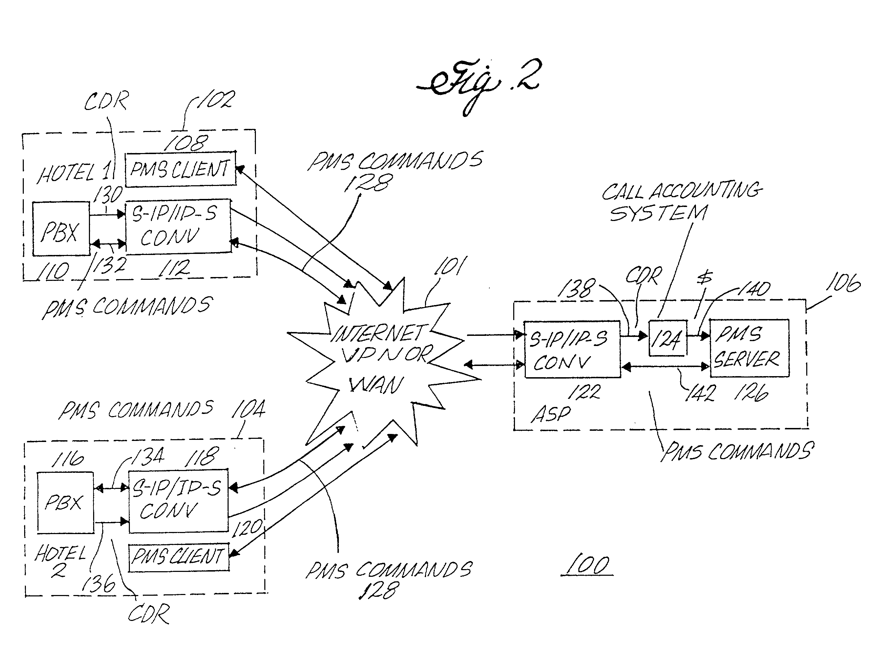

FIG. 2 is a schematic block diagram of an internetwork 100 for providing centralized property management services preferably to one or more hotel sites according to one embodiment of the present invention. The property management services may include the check-in, check-out, and billing of patrons of the hotels. Preferably, the property management services include the billing of telephone calls made by the patrons of the hotels. In other embodiments, the property management services may also include the accounting and billing of other services, such as fax services, other business services, minibar purchases, in-room internet access, housekeeping services, movie viewing, and/or other entertainment services.

The internetwork 100 preferably includes client networks 102, 104 and an application service provider (ASP) network 106. The client networks 102, 104 are preferably located at hotel sites remote from the ASP network 106. The ASP network 106 may be located at a central location, which for example, may be a hotel headquarters. The ASP network 106 may also be referred to as an ASP site or service provider network.

The client networks 102, 104 and ASP network 106 are preferably coupled to one another over computer networks 101 including but not limited to the public internet, a virtual private network (VPN), or a wide area network (WAN). The client networks 102 and 104 each preferably include a call management unit such as, for example, a private branch exchange (PBX) unit 110, 116, protocol converter 112, 118, and property management system (PMS) client 108, 120. The PBX units 110, 116 are preferably coupled to the protocol converters 112, 118 over serial links 130, 132, 134, 136. PBX units are well known by those skilled in the art, and may include circuitry and logic for managing incoming and outgoing calls for their respective hotel sites. The PBX units 110, 116 preferably create and maintain a call detail record (CDR) including call parameters for each call sent and/or received at their respective client networks 102, 104 as is conventional in the art. The call parameters preferably include a calling extension number, called number, call duration, and the like. The PBX units 110, 116 may further create and maintain information relating to other services. For instance, each time housekeeping services are provided, a maid providing the services may enter a predetermined code in the hotel room's telephone set indicating that such service was provided. This information may then preferably transmitted through the PBX unit to the PMS system so that the clean/dirty status of the room can be determined by hotel personnel.

The protocol converters 112, 118 are preferably serial-to-internet-protocol and/or internet-protocol-to-serial converters conventional in the art. The protocol converters 112, 118 preferably include network interfaces (not shown) for communicating over the computer networks 101. The communication is preferably carried out using a computer network protocol, such as, for example, the internet protocol (IP).

The PMS clients 108, 120 are preferably platform computers or network servers also conventional in the art. The PMS clients 108, 120 preferably include a network interface (not shown) for communicating over the computer networks 101. The communication is also preferably carried out using a computer network protocol, such as, for example, the internet protocol. The PMS clients 108, 120 further preferably include user interfaces such as, for example, keyboards, keypads, displays, and the like, for allowing interaction with a user of the system.

The ASP network 106 preferably includes a property management system (PMS) server 126, a call accounting system (CAS) 124, and a protocol converter 122. The PMS server 126, CAS 124, and protocol converter 122 are preferably interlinked to each other over serial links 138, 140, 142.

The protocol converter 122 is preferably a serial-to-IP and/or from IP-to-serial converter conventional in the art, and may be similar to the protocol converters 112, 118 at the client networks 102, 104. The protocol converter 122 preferably includes a network interface (not shown) for communicating over the computer networks 101. The communication is preferably carried out using a computer network protocol, such as, for example, the internet protocol.

The CAS 124 is preferably a centralized CAS providing centralized call accounting services to the hotel sites associated with the client networks 102, 104. The CAS 124 may be similar to the CAS 14 of FIG. 1 traditionally used in the self-contained hotel networks, but preferably includes additional functionalities and interfaces for communicating with the protocol converter 122 and providing centralized call accounting services to the various hotel sites.

The PMS server 126 is preferably a platform computer or network server also conventional in the art. The PMS server 106 preferably communicates with the PMS clients 102, 104 to provide centralized property management services to the hotel sites. The PMS server 106 also communicates with the PBX unit 110, 116 preferably using the PMS commands 128. The PMS commands may include commands for activating and/or deactivating long-distance call access for a particular patron.

It is to be understood that the client networks 102, 104 and the ASP network 106 may include other clients, servers, components, and/or functions that are not shown but are conventional in the art.

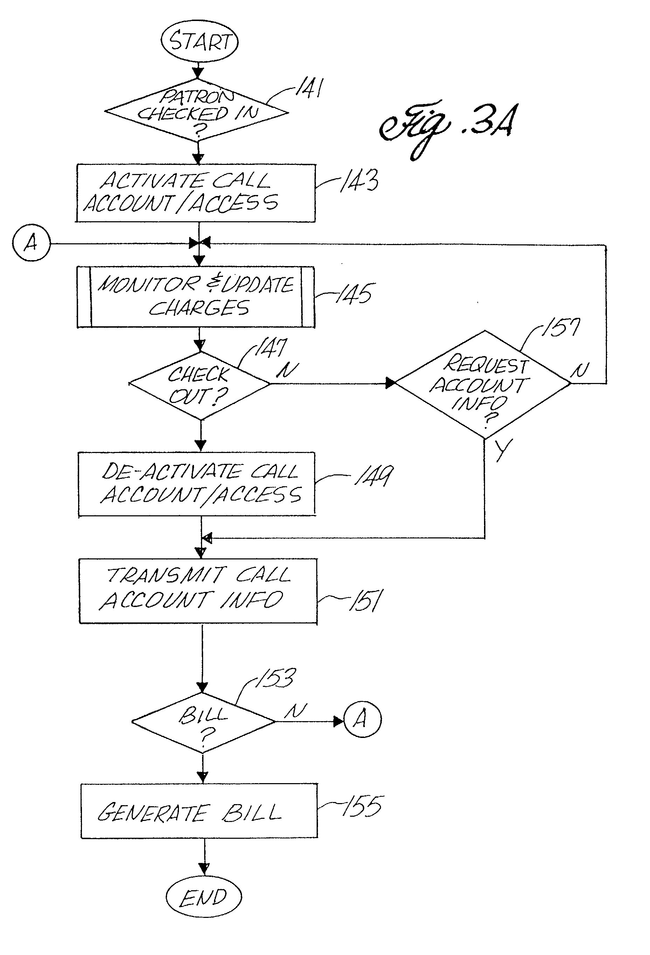

FIGS. 3A-3B are flow diagrams for processing and billing telephone call charges according to the embodiment illustrated in FIG. 2. The process starts, and in step 141, the PMS client 108, 120 determines if a patron has checked-in to the hotel. If the answer is YES, the patron's call account is activated in step 143 and the patron is given access for making long-distance phone calls. In this regard, the PMS client 108 transmits the check-in information to the PMS server 126 over the computer networks 101. Upon receipt of the check-in information, the PMS server 126 preferably creates an account for the patron and transmits a PMS command to the PBX unit 110, 116 to enable long-distance calls for the patron. The PMS command is preferably transmitted in serial format to the protocol converter 122 which converts it into a network format, such as, for example, an IP format, and transmits it over the computer networks 101. The protocol converter 112 at the client network 102, 104 reconverts the PMS command from the network format to the serial format, and transmits it to the PBX unit 110, 116.

In step 145, the PBX unit 110, 116 works with the PMS server 126 to monitor and update telephone charges and other charges/services associated with the patron. In step 147, the PMS client 108, 120 determines if the patron is to be checked-out of the hotel. If the answer is YES, the patron's call account is de-activated in step 149 and long-distance calls are disabled for the patron. In this regard, the PMS client 108 transmits the check-out information to the PMS server 126 over the computer networks 101. Upon receipt of the check-out information, the PMS server 126 preferably de-activates the patron's call account and transmits a PMS command to the PBX unit 110, 116 to disable long-distance calls for the patron. The PMS command is preferably transmitted in serial format to the protocol converter 122 which converts it into a network format, such as, for example, an IP format, and transmits it over the computer networks 101. The protocol converter 112 at the client network 102, 104 reconverts the PMS command from the network format to the serial format, and transmits it to the PBX unit 110, 116.

In step 151, the PMS server 140 transmits the patron's call account information including information on the charged calls, to the PMS client 108, 120. This information is also transmitted if the PMS client 108, 120 expressly requests the information from the PMS server 126 in step 157.

In step 153, the PMS client 108, 120 determines if the patron is to be billed for the charges. If the answer is YES, the PMS client 108, 120 proceeds to generate a bill in step 155 with the call account information received from the PMS server 126.

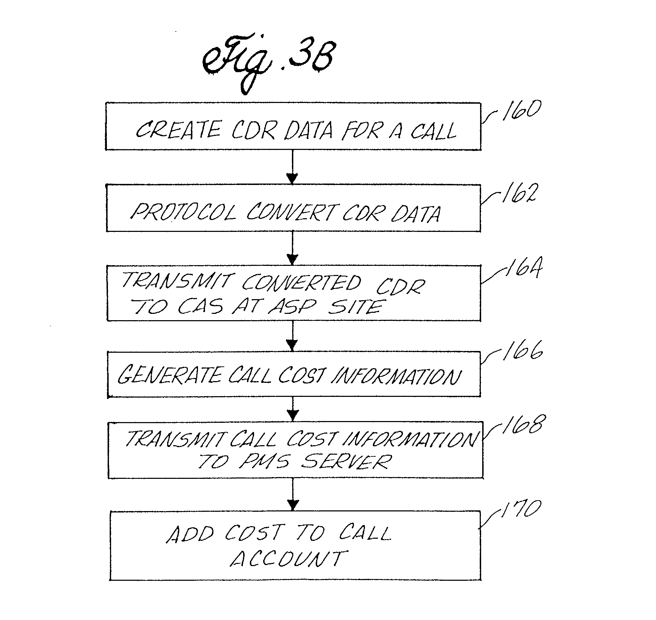

FIG. 3B is a more detailed flow diagram of the step 145 for updating telephone charges for a hotel patron according to one embodiment of the invention. In step 160, the PBX unit 110, 116 creates a CDR including various call parameters for a particular telephone call initiated and completed by the patron at the hotel site according to conventional methods. The call parameters preferably include a calling extension number, called number, call duration, and/or any other information associated with the call, caller, and/or callee. The PBX unit 110, 116 at the client network 102, 104 preferably transmits the CDR to the CAS 124 at the ASP site for centralized call accounting. In this regard, the protocol converter 112, 118 at the hotel site in step 162, preferably protocol converts the CDR from a serial format into a network format, such as, for example, an IP format. In step 164, the protocol converter 112, 118 provides the converted CDR to the protocol converter 122 at the ASP site over the computer networks 101. The protocol converter 122 at the ASP site reconverts the CDR into a serial format and transmits it to the CAS 124 over a serial link 138.

In step 166, the CAS 124 preferably calculates the cost of the call based on the CDR data. In step 168, the CAS 124 provides the call cost information to the PMS server 126 over serial link 140. Upon receipt of the call cost information, the PMS server 126 preferably adds the cost to the patron's call account in step 170.

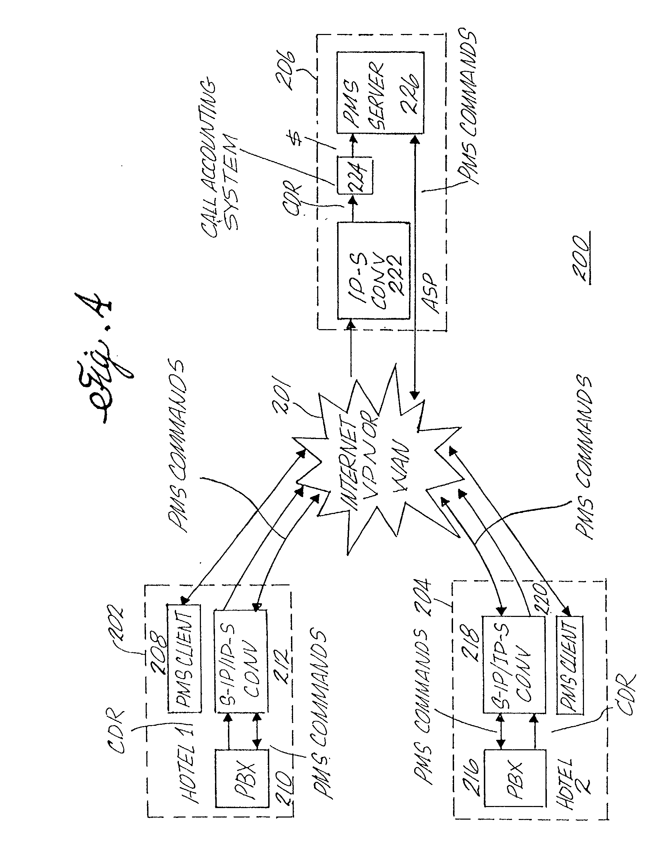

FIG. 4 is a schematic block diagram of an internetwork 200 for providing centralized property management services including call accounting services according to another embodiment of the present invention. The internetwork 200 preferably includes client networks 202, 204 and an ASP network 206 which may be similar to the client networks 102, 104 and ASP network 106 of FIG. 2. As in the client networks 102 and 104, the client networks 202 and 204 each preferably include a PBX unit 210, 216, protocol converter 212, 218, and PMS client 208, 220.

Furthermore, as in the ASP network 106 of FIG. 2, the ASP network 206 of FIG. 4 preferably includes a PMS server 226, a CAS 224, and a protocol converter 222. In the embodiment illustrated in FIG. 4, however, the PMS server 226 preferably does not transmit and/or receive PMS commands serially via the protocol converter 222. Instead, the PMS server 226 preferably transmits and/or receives the PMS commands and other information directly over computer networks 201 using a computer network protocol, such as, for example the internet protocol. In an alternative embodiment, the call accounting system 224 also preferably transmits and/or receives information directly over computer networks 201.

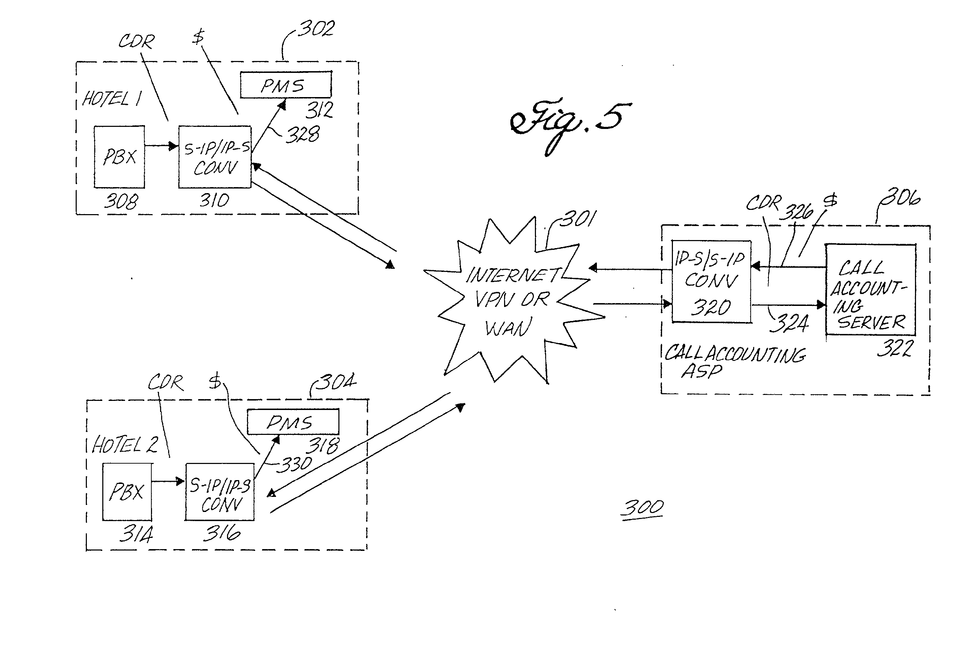

FIG. 5 is a schematic block diagram of an internetwork 300 for providing centralized call accounting services according to a further embodiment of the present invention. According to this embodiment, the call accounting service is preferably provided from a central location while the property management services preferably are not centralized, but provided individually at each hotel site.

The internetwork 300 preferably includes client networks 302, 304 and a call accounting ASP network 306. The call accounting ASP network 306 may also be referred to as an ASP network, an ASP site, or a service provider network.

As in the client networks of the previous embodiments, the client networks 302 and 304 each preferably include a PBX unit 308, 314 and protocol converter 310, 316 which may be similar to the PBX units and protocol converters of the previous embodiments. The client networks 302, 304, however, do not include a PMS client. Instead, each client network 302, 304 includes a PMS 312, 318, which may be similar to the PMS 12 of FIG. 1 traditionally used in the self-contained hotel networks. The PMS 302, 304, however, may also include additional functionalities and interfaces for communicating with the protocol converter 310, 316.

The call accounting ASP network 306 preferably includes a protocol converter 320 and a call accounting server 322. The protocol converter 320 may be similar to the protocol converters of the previous embodiments. The call accounting server 322 is preferably a platform computer or network server including the functionalities of the CAS of the previous embodiments for providing centralized call accounting services for the hotel sites associated with the client networks 302, 304. The call accounting server 322 may also be referred to as a CAS.

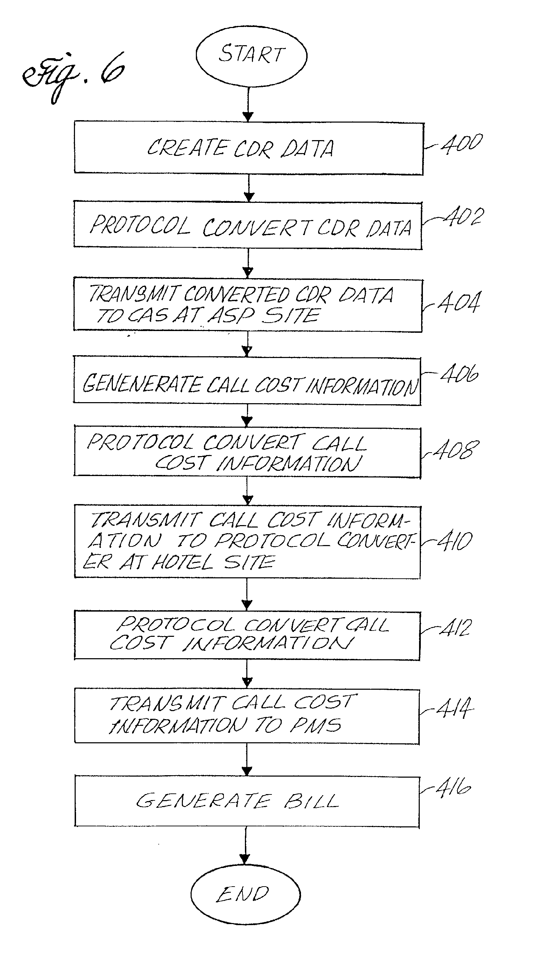

FIG. 6 is a flow diagram for processing telephone call charges according to the embodiment illustrated in FIG. 5. The process starts, and in step 400, the PBX unit 308, 314 creates a CDR including various call parameters for a particular telephone call initiated and completed by a hotel patron at the hotel site. The call parameters preferably include a calling extension number, called number, call duration, and/or any other information associated with the call, caller, and/or callee. In step 402, the PBX unit 308, 314 at the client network 302, 304 preferably transmits the CDR to the call accounting server 322 at the ASP site. In this regard, the protocol converter 310, 316 at the hotel site preferably protocol converts the CDR from serial format into a network format, such as, for example, an IP format, and provides the converted CDR to the protocol converter 320 at the ASP site over computer networks 301. The protocol converter 320 at the ASP site reconverts the CDR into a serial format and transmits it to the CAS 324 over serial link 324. In an alternative embodiment, the CDR is transmitted directly to the call accounting server 322 in a network format bypassing the protocol converter 320.

In step 406, the call accounting server 322 preferably calculates the cost of the call based on the CDR data. In step 408, the call accounting server 124 provides the call cost information to the protocol converter 320 over serial link 326. The protocol converter converts the call cost information from a serial format into a network format, such as, for example, an IP format. In step 410, the protocol converter 320 transmits the call cost information to the protocol converter 310, 316 at the hotel site over the computer networks 301. In an alternative embodiment, the call cost information is transmitted in a network format directly over the computer networks 301 bypassing the protocol converter 320.

In step 412, the protocol converter 310, 316 receives the call cost information and reconverts it to a serial format. In step 414, the protocol converter 310, 316 transmits the call cost information to the PMS 312, 318 at the client network 302, 304 over serial links 328, 330. In step 416, the PMS 312, 318 receives the call cost information and bills the hotel patron's call account according to conventional methods.

Although this invention has been described in certain specific embodiments, those skilled in the art will have no difficulty devising variations which in no way depart from the scope and spirit of the present invention. For example, the client networks 102, 104, 202, 204, 302, 304 and the ASP networks 106, 206, 306 may include other clients, servers, or components for supporting the centralized billing and/or accounting of other hotel services, such as, for example, fax services, other business services, minibar charges, in-room Internet access, housekeeping services, movie viewing charges, and/or other entertainment services. Thus, in addition to a call accounting system/server, an ASP network may include a fax accounting system/server, movie accounting system/server, or the like.

It is therefore to be understood that this invention may be practiced otherwise than is specifically described. Thus, the present embodiments of the invention should be considered in all respects as illustrative and not restrictive, the scope of the invention to be indicated by the appended claims and their equivalents rather than the foregoing description.

## Claims

1. A method for providing property management services, comprising:
generating call parameter information;
generating call cost information as a function of the call parameter information; and
generating charge information for an account as a function of the call cost information;
wherein one or more of the generating steps is performed in a client network, and
wherein one or more of the generating steps is performed in a service provider network.

2. The method according to claim 1, wherein the information generated in the client network in the one or more of the generating steps performed in the client network is transmitted to the service provider network.

3. The method according to claim 1, wherein the information generated in the service provider network in the one or more of the generating steps performed in the service provider network is transmitted to the client network.

4. An internetwork for providing property management services, comprising:
a client network; and
a service provider network, **characterized in that** the client network transmits to the service provider network a call parameter for a completed call, further **characterized in that** the service provider network determines call cost information for the completed call based on the call parameter and transmits the call cost information back to the client network to charge the cost to an account.

5. The internetwork of claim 4, **characterized in that** the call parameter is transmitted over at least part of the client network on a serial link.

6. The internetwork of claim 4, **characterized in that** the call parameter is transmitted over at least part of the service provider network on a serial link.

7. The internetwork of claim 4, **characterized in that** the call parameter is transmitted between the client network and the service provider network over a wide area network.

8. The internetwork of claim 7, wherein the wide area network is a public internet.

9. The internetwork of claim 4, **characterized in that** the call cost information is transmitted over at least part of the client provider network on a serial link.

10. The internetwork of claim 4, **characterized in that** the call cost information is transmitted over at least part of the service provider network on a serial link.

11. The internetwork of claim 4, **characterized in that** the call cost information is transmitted between the client network and the service provider network over a wide area network.

12. The internetwork of claim 11, wherein the wide area network is a public internet.

13. An internetwork for providing property management services comprising a plurality of client networks coupled to a service provider network over a wide area network, **characterized in that** ones of the client networks include ones of private branch exchanges, respectively, coupled to first ones of protocol converters, respectively, for exchanging data with the service provider network, and further **characterized in that** the service provider network includes a call accounting system and a second protocol converter for exchanging data with ones of the client networks.

14. The internetwork of claim 13, wherein the private branch exchanges generate call parameters for completed calls for transmitting to the service provider network.

15. The internetwork of claim 13, wherein the call accounting system receives the call parameters and generates call cost information based on the call parameters for transmitting to the respective client networks.

16. An internetwork for providing property management services comprising:
a client network comprising:
a call management unit for generating call parameter data for a completed call; and
a client system for receiving call cost information and charging the cost to an account;
a service provider network comprising:
a call accounting system for receiving the call parameter data and generating call cost information for the completed call based on the call parameter data; and
a server system coupled to the call accounting system for storing the call cost information and transmitting the call cost information to the client system; and
a wide area network electronically linking the client network to the service provider network for allowing communication between the client network and the service provider network.

17. The internetwork of claim 16, wherein the call management unit is a private branch exchange unit.

18. The internetwork of claim 16, wherein the wide area network is a public internet.

19. The internetwork of claim 16, wherein the server system transmits property management commands to the client network.

20. The internetwork of claim 16 further comprising a protocol converter coupled to the call management unit for converting between a first transmission format and a second transmission format.

21. The internetwork of claim 16 further comprising a protocol converter coupled to the call accounting system for converting between a first transmission format and a second transmission format.

22. In a system including a client network coupled to a service provider network over a wide area network, a method for providing property management services comprising the steps of:
generating at the client network a call parameter for a completed call;
transmitting to the service provider network the call parameter;
determining at the service provider network call cost information for the completed call based on the call parameter; and
transmitting the call cost information back to the client network to charge the cost to an account.

23. The method of claim 22, wherein the step of transmitting the call parameter comprises the step of transmitting the call parameter over at least part of the client network on a serial link.

24. The method of claim 22, wherein the step of transmitting the call parameter comprises the step of transmitting the call parameter over at least part of the service provider network on a serial link.

25. The method of claim 22, wherein the step of transmitting the call cost information comprises the step of transmitting the call cost information over at least part of the client network on a serial link.

26. The method of claim 22, wherein the step of transmitting the call cost information comprises the step of transmitting the call cost information over at least part of the service provider network on a serial link.

27. The method of claim 22 further comprising the step of transmitting a property management command to the client network.

28. The method of claim 27, wherein the property management command includes a command to activate the account.

29. The method of claim 27, wherein the property management command includes a command to de-activate the account.
